Europäisches Patentamt

European Patent Office

Office européen des brevets

(19)

(11) **EP 0 597 295 B1**

(12) **FASCICULE DE BREVET EUROPEEN**

(45) Date de publication et mention
de la délivrance du brevet:
**12.01.2000 Bulletin 2000/02**

(51) Int Cl.⁷: **C11C 3/10**, C11B 7/00,
C11B 3/14, A23G 3/00,
A23L 1/29

(21) Numéro de dépôt: **93117053.4**

(22) Date de dépôt: **21.10.1993**

(54) **Procédé de production d'un substitut de matière grasse butyrique ou de beurre végétal, produit obtenu et composition le contenant**

Verfahren zur Herstellung von einem Butteräurefett- oder einem pflanzlichen Butterersatz, Erzeugnis und Zusammensetzung daraus

Process for the preparation of a butyric acid fat substitute or a vegetable butter substitute, product and composition including same

(84) Etats contractants désignés:
**AT BE CH DE DK ES FR GB IE IT LI NL SE**

(30) Priorité: **12.11.1992 US 975413**

(43) Date de publication de la demande:
**18.05.1994 Bulletin 1994/20**

(73) Titulaire: **SOCIETE DES PRODUITS NESTLE S.A.
1800 Vevey (CH)**

(72) Inventeurs:
• **Bertoli, Constantin
CH-1032 Romanel S/Lausanne (CH)**
• **Hosszu-Sackett, Katalin
Los Angeles, CA 90049 (US)**
• **Melachouris, Nicholas
Westlake Vil., CA 9136 (US)**

• **Traitler, Helmut
CH-1802 Corseaux (CH)**

(74) Mandataire: **Archambault, Jean et al
55, avenue Nestlé
1800 Vevey (CH)**

(56) Documents cités:
**EP-A- 0 170 431       EP-A- 0 305 901
EP-A- 0 322 027       CH-A- 434 948
GB-A- 2 042 579       US-A- 5 196 215**

• **DATABASE WPI Week 9216, Derwent
Publications Ltd., London, GB; AN 92-129442 &
JP-A-4 075 593 (KANEFUCHI CHEM KK) 10 Mars
1992**
• **DATABASE WPI Week 9215, Derwent
Publications Ltd., London, GB; AN 92-120578 &
JP-A-4 065 493 (AJINOMOTO KK) 2 Mars 1992**

EP 0 597 295 B1

**Description**

La présente invention concerne un procédé de production d'un substitut de matière grasse butyrique ou de beurre végétal.

Il est de l'intérêt général de créer des matières grasses répondant à une demande nutritionnelle de faible teneur en cholestérol et d'un nombre de calories réduit, qui puisse remplacer la matière grasse butyrique dans certaines applications, en particulier dans la crème glacée ou dans des sauces à la crème et au fromage, le yaourt, des compositions pour biscuits et des graisses végétales. L'un des problèmes posés par les matières grasses connues d'origine végétale qui pourraient remplacer la matière grasse butyrique réside dans leur haute teneur en acides gras insaturés qui peuvent nuire à l'arôme en raison d'une décomposition par voie d'oxydation conduisant à des produits de dégradation. Des matières grasses végétales partiellement hydrogénées ne constituent pas une alternative valable, puisqu'elles contiennent de grandes quantités de trans-acides gras qui constituent un inconvénient du point de vue nutritionnel. Il est aussi intéressant d'un point de vue général de créer des matières grasses d'origine végétale répondant à un besoin nutritionnel réduit en calories, qui soient capables de remplacer le beurre de cacao et les matières grasses utilisées en confiserie telles que les équivalents du beurre de cacao basés sur des graisses d'origine tropicale, par exemple des fractions d'huile de palme, ou des graisses végétales partiellement hydrogénées. Des graisses d'origine tropicale contiennent de grandes quantités d'acide laurique ou myristique qui sont perçues comme étant dangereuses pour la santé, tandis que des graisses végétales partiellement hydrogénées contiennent de grandes quantités de trans-acides gras inacceptables, comme indiqué précédemment.

Le document EP-A-322 027 concerne des matières grasses peu énergétiques qui sont pauvres en acides gras insaturés et qui contiennent principalement des triglycérides avec un acide gras saturé à longue chaîne et deux acides gras à chaîne de longueur moyenne. L'une des matières de départ pour leur production est l'huile de colza entièrement hydrogénée, à haute teneur en acide érucique, et ces matières contiennent donc des acides gras ayant 20 et plus de 20 atomes de carbone, principalement l'acide béhénique. Elles ont une densité de calories réduite, des propriétés organoleptiques convenables et un comportement caractéristique à la cristallisation. On les prépare par transposition statistique de triglycérides avec trois acides gras saturés à longue chaîne, contenant de l'acide béhénique, avec des triglycérides à chaîne de longueur moyenne, l'opération étant suivie d'une distillation moléculaire.

EP-A-0170431 a pour but la fabrication d'une matière grasse à tartiner de type margarine, à mélanger le cas échéant avec une huile contenant des acides gras polyinsaturés pour produire des shortenings, à partir d'un corps gras dont les propriétés de texture et de fusion sont semblables à celles de la matière grasse lactique.

Le procédé comprend l'interestérification enzymatique d'une matière grasse végétale contenant de l'acide palmitique avec les acides laurique et butyrique ou encore avec une graisse laurique. Cette réaction a lieu en présence de solvant. Préférentiellement, le procédé comprend une étape d'hydrogénation du produit de la réaction enzymatique. Lorsqu'un traitement ultérieur du mélange obtenu est prévu, celui-ci est fractionné en stéarine et oléine en présence d'acétone, l'oléine étant incorporée dans une huile de tournesol.

EP-A-0322027 concerne un procédé de préparation de beurre végétal dur destiné à être incorporé dans les couvertures grasses pour confiseries, consistant à estérifier le glycérol avec les esters méthyliques d'acides saturés à longue chaîne de manière à former la tribéhénine, puis à transformer la tribéhénine en la faisant réagir avec des triglycérides à chaîne moyenne par interestérification aléatoire par voie chimique, à blanchir le mélange obtenu et à lui faire subir une distillation moléculaire.

La présente invention concerne donc un procédé de production d'un substitut de matière grasse butyrique ou de beurre végétal, ne comprenant pas d'étape de distillation moléculaire, caractérisé par le fait que l'on prépare un mélange contenant 30 à 65% en poids d'une huile végétale entièrement hydrogénée riche en acide stéarique et 35 à 70% en poids d'un triglycéride d'acides gras à longueur de chaîne moyenne riche en acides caproique, caprylique et caprique, que l'on agite le mélange avec une lipase immobilisée en l'absence de solvant, que l'on neutralise le mélange interestérifié, que l'on décolore le mélange neutralisé et que l'on désodorise le mélange décoloré.

Une huile végétale entièrement hydrogénée que l'on peut utiliser dans la présente invention peut être une huile végétale choisie parmi l'huile de tournesol, l'huile de carthame, l'huile de tournesol à haute teneur en acide oléique, l'huile de carthame à haute teneur en acide oléique, l'huile de soja, l'huile de maïs, l'huile de colza à teneur en acide érucique faible ou nulle ou des fractions d'oléine végétale qui ont subi une hydrogénation totale ou l'huile de <u>Pentaclethra</u> <u>macrophylla</u> totalement hydrogénée ou la tristéarine pure. Il s'agit de préférence d'huile de tournesol entièrement hydrogénée contenant environ 92 % d'acide stéarique et environ 8 % d'acide palmitique ou d'huile de soja entièrement hydrogénée contenant environ 89 % d'acide stéarique et environ 11 % d'acide palmitique, ou d'un mélange de ces matières grasses végétales.

Un triglycéride d'acides gras à longueur de chaîne moyenne (MCT) pouvant être utilisé dans la présente invention peut être d'origine naturelle ou synthétique et est riche en acides gras caproïque, caprylique ou caprique et contient de préférence principalement les acides gras caprylique et caprique. On peut l'obtenir par exemple à partir des huiles de noix de coco, de palmiste ou de babassu.

L'interestérification selon l'invention est conduite par voie enzymatique à partir d'un mélange de 35 à 70 % en poids de MCT et de 30 à 65 % en poids de triglycérides entièrement hydrogénés riches en acide stéarique (FHLCT ci-après), de préférence 45 à 53 % en poids de MCT et 47 à 55 % en poids de FHLCT et notamment à partir d'un mélange d'environ 50 à 53 % en poids de MCT pour 47 à 50 % en poids de FHLCT par rapport au poids de triglycérides.

Dans le procédé de l'invention, on conduit l'interestérification par voie enzymatique. Des triglycérides de départ sont mélangés dans le rapport désiré et chauffés de préférence à 63-75°C, notamment à environ 65°C dans un récipient de réaction. On conduit la réaction sans addition d'un solvant quel qu'il soit. On ajoute à ce mélange 1 à 10 % et de préférence environ 3 % en poids d'un enzyme immobilisé du type lipase, par exemple le Lipozyme IM 20 (R, Novo) ou le Lipozyme IM 60 (R, Novo) en présence de 2 à 10 % en poids d'eau. On agite le mélange pendant 5 à 24 h, de préférence pendant 7 à 15 h. A la fin de la réaction, on filtre le mélange sur un filtre-presse, de préférence à environ 50°C, et on recueille les billes d'enzyme sur le filtre-presse. On peut utiliser l'enzyme plusieurs fois sans le réhydrater. Il n'y a pas de variation de son activité, bien qu'il perde de l'eau pendant chaque cycle et qu'il ait une teneur en eau légèrement supérieure à 1 % après 4 cycles. A cette teneur en eau, l'enzyme doit être réhydraté pour recouvrer son activité initiale. On peut obtenir ce résultat en pulvérisant la quantité d'eau nécessaire sur l'enzyme immobilisé. Après mélange, l'enzyme est maintenu dans un récipient fermé pendant plusieurs heures, par exemple pendant environ 4 h pour que l'eau se distribue de façon homogène dans le support et l'enzyme. La pulvérisation et l'équilibrage peuvent être effectués à la température ambiante. La quantité d'eau devant être ajoutée peut être calculée à partir de la quantité d'eau donnée, par exemple 1 %, et par rapport à la valeur désirée, par exemple 10 %. Après réhydratation, l'enzyme peut être utilisé dans plusieurs cycles. La phase de matière grasse est ensuite blanchie avec environ 0,1 % d'une terre décolorante, par exemple Tonsil (R).

En variante, le mélange de matières grasses de départ peut contenir des parties à peu près égales de MCT et de FHLCT, en poids. Lorsque la réaction est terminée, le mélange réactionnel est ensuite fractionné de manière à séparer la tristéarine n'ayant pas réagi. On effectue le fractionnement en traitant le mélange à l'état sec sous légère agitation, de préférence à 37-48°C et notamment à environ 40°C avec inoculation de 0,05 à 0,1 % en poids de cristaux de tristéarine ou de FHLCT pendant 1 à 5 h et notamment pendant environ 2 h, après quoi on sépare par filtration à la température de cristallisation sur un filtre-presse environ 10 à 15 % en poids d'une fraction de haut point de fusion riche en tristéarine. La fraction riche en tristéarine séparée peut être recyclée par incorporation au mélange de départ d'un autre lot de production.

Dans les deux formes de réalisation du procédé comme indiqué ci-dessus, le mélange interestérifié de matières grasses ou le filtrat de l'opération de filtration doit être blanchi. En outre, la matière grasse interestérifiée par voie enzymatique doit être neutralisée afin d'éliminer les acides gras libres restants. Une désodorisation a lieu à la fin du procédé.

Dans une forme de mise en oeuvre de l'opération de désodorisation, à une température au maximum égale à 200°C, on soumet le filtrat à une désodorisation à la vapeur d'eau sous un vide d'environ 2,66 mbars sous un courant d'environ 0,4 % en poids de vapeur d'eau par heure pendant environ 2 à 3 h. Les produits ainsi obtenus sont utiles comme substituts de la matière grasse butyrique.

Dans une autre forme de mise en oeuvre de l'étape de désodorisation qui est adaptée à la production de substituts de beurre de cacao ou de matière grasse pour confiserie, on effectue la désodorisation du filtrat sous température élevée d'au moins 230°C et de préférence d'environ 240°C, les autres paramètres restant les mêmes que dans la forme de réalisation précédente. Dans ces dernières conditions, 6 à 10 % et de préférence environ 10 % en poids des triglycérides d'acides gras en C6, C8 et C10 qui n'ont pas réagi sont éliminés par entraînement. Ces derniers triglycérides peuvent être recyclés en tête du procédé.

L'invention concerne aussi le substitut de matière grasse butyrique ou de beurre de cacao et de matière grasse pour confiserie obtenu par le procédé ci-dessus.

L'invention concerne en outre des compositions alimentaires à nombre de calories réduit comprenant le substitut de matière grasse butyrique ou de beurre de cacao et de matière grasse pour confiserie obtenu par le procédé ci-dessus.

On peut obtenir en particulier de la crème glacée, des sauces à la crème et au fromage, de préférence pour aliments congelés, du yogourt, des mélanges pour patisseries et gâteaux secs, des sucreries et des graisses végétales pour la cuisson, où la matière grasse butyrique est remplacée en partie ou en totalité par la matière grasse obtenue conformément au procédé décrit ci-desssus. Dans la crème glacée par exemple, le substitut de matière grasse butyrique à un taux remplaçant partiellement ou totalement la matière grasse du lait apportée par la crème, a offert des avantages substantiels avec une densité calorique légèrement plus faible, un cholestérol plus faible, une meilleure libération de l'arôme, une amélioration de la texture et de la stabilité pour une résistance au choc thermique à peu près la même, comparativement à une crème glacée normale à base de crème.

Dans des compositions d'enrobage et de fourrure à base de chocolat pour confiseries, le substitut de beurre de cacao ou de matière grasse pour confiseries a présenté à peu près les mêmes propriétés fonctionnelles que le beurre de cacao à un niveau de remplacement partiel ou total de ce beurre avec une plus faible densité calorique.

Les exemples suivants donnent une illustration complémentaire de l'invention. Les parties et les pourcentages sont exprimés en poids, sauf spécification contraire.

Exemple 1

On a mélangé 31,8 kg d'huile à base d'acides gras à chaîne en C8, C10 (MCT) avec 28,2 kg d'huile de soja entièrement hydrogénée (FHSBO) dans un récipient de réaction et on a chauffé le mélange à 65°C. On a ajouté à ce mélange 3 % d'un enzyme immobilisé du type lipase, à savoir le produit Lipozyme IM 60 (R, Novo) en présence de 10 % d'eau sur la base de l'enzyme. Le mélange a été agité pendant 7 h. A la fin de la réaction, le mélange a été filtré sur un filtre-presse à 50°C et les billes d'enzyme ont été recueillies sur le filtre-presse. Le filtrat a été neutralisé avec de la soude caustique et la phase grasse a été recueillie. Cette phase a été ensuite blanchie avec 0,06 kg de Tonsil (R) par agitation à 85°C pendant 20 minutes sous pression de 25 mbars. Après séparation de la terre décolorante, la matière grasse a été désodorisée à la vapeur à 200°C sous un vide de 2,66 mbars (2 mm de Hg) avec un courant de vapeur de 0,24 kg de vapeur par heure pendant 2 h.

Le substitut de matière grasse résultant était un produit doux, blanc et stable ayant une plage de fusion très semblable à celle de la matière grasse butyrique comme déterminé par calorimétrie analytique différentielle (CAD) et mesure de sa teneur en matière grasse solide par résonance magnétique nucléaire (RMN) pulsée. Les courbes thermiques construites par CAD à une vitesse d'analyse de 5°C/minute lorsque le produit a été chauffé de -20 à +60°C ont montré une concordance étroite du profil de fusion avec celui de la matière grasse butyrique. Le substitut de matière grasse butyrique comparé au mélange physique de MCT/FHSBO de départ a montré un profil de fusion entièrement différent.

L'analyse qualitative par chromatographie gazliquide de la composition et de la distribution des acides gras sur le squelette de glycérol a donné les résultats indiqués sur le tableau 1.

Tableau 1

| Triglycérides | % en poids | Moles % |
|---|---|---|
| D'après le type (M=chaîne moyenne, L=longue chaîne) | | |
| MLM, MML, MLL, LML | 72,65 | 68,63 |
| MML, MLM | 44,55 | 44,99 |
| LLM, LML | 28,10 | 23,64 |
| MMM | 21,75 | 27,32 |
| LLL | 5,60 | 4,05 |
| | $\overline{100}$ | $\overline{100}$ |
| D'après le nombre d'atomes de carbone des acides gras | | |
| C24: 8-8-8 | 4,20 | 5,67 |
| C26: 8-8-10 | 9,00 | 11,46 |
| C28: 8-10-10 | 6,80 | 8,20 |
| C30: 10-10-10 | 1,74 | 1,99 |
| C32: 8-8-16 | 1,93 | 2,10 |
| C34: 8-8-18/8-10-16 | 17,09 | 17,77 |
| C36: 8-10-18/10-10-16 | 19,56 | 19,44 |
| C38: 10-10-18 | 5,97 | 5,68 |
| C40: 8-16-16 | 0,44 | 0,40 |
| C42: 8-16-18/10-16-16 | 3,50 | 3,07 |
| C44: 8-18-18/10-16-18 | 15,52 | 13,12 |
| C46: 10-18-18 | 8,65 | 7,04 |
| C48: 16-16-16 | 0,25 | 0,20 |
| C50: 16-16-18 | 0,10 | 0,08 |
| C52: 16-18-18 | 1,46 | 1,08 |
| C54: 18-18-18 | 3,79 | 2,70 |
| | $\overline{100}$ | $\overline{100}$ |

Comme représenté, le substitut de matière grasse butyrique ne contient pas d'acides gras insaturés ni de trans-acides gras et n'est composé que de triglycérides d'acide caprylique, d'acide caprique (M), d'acide palmitique et d'acide stéarique (L), avec une prédominance d'acides monoM-diL et monoL-diM. Les substituts de matière grasse butyrique ont eu une fonctionnalité et des propriétés organoleptiques analogues à celles de la matière grasse butyrique provenant de la crème, mais ils étaient dépourvus de cholestérol et avaient une meilleure stabilité à l'oxydation et une densité calorique inférieure d'environ 25 %.

Exemple 2

Un mélange de parties égales de triglycérides à chaîne en C8, C10, et de tristéarine a été traité comme dans l'exemple 1. Une fois la réaction terminée, le mélange réactionnel décoloré a été fractionné à sec par traitement à 40°C avec inoculation de 0,05 % de cristaux de tristéarine ou de FHLCT pendant 2 h sous lente agitation, puis filtré sur un filtre-presse à la même température. La fraction solide riche en tristéarine de haut point de fusion qui a été séparée représentait 12 % du mélange réactionnel et elle a été recyclée en vue de la production ultérieure dans le mélange de départ du lot suivant.

Une désodorisation subséquente du filtrat dans les conditions indiquées dans l'exemple 1 a donné un substitut blanc de matière grasse butyrique de fonctionnalité et de propriétés organoleptiques analogues à celles de la matière grasse butyrique normale issue de la crème, mais dépourvu de cholestérol et avec une meilleure stabilité à l'oxydation et une densité calorique inférieure d'environ 25 %.

Exemple 3

Un mélange de parties égales de triglycérides à chaîne en C8, C10 et de tristéarine a été chauffé à 65°C dans un récipient de réaction.

On a ajouté à ce mélange 3 % d'un enzyme immobilisé du type lipase, à savoir le produit Lipozyme IM 60 (R, Novo) en présence de 10 % d'eau sur la base de l'enzyme. Le mélange a été agité pendant 7 h. A la fin de la réaction, le mélange a été filtré sur un filtre-presse à 50°C et les billes d'enzyme ont été recueillies sur le filtre-presse. Le filtrat a été neutralisé avec de la soude caustique puis décoloré comme dans l'exemple 1.

On a ensuite effectué une désodorisation du filtrat neutralisé et décoloré comme dans l'exemple 1, ce qui a donné un substitut blanc de matière grasse butyrique de fonctionnalité et de propriétés organoleptiques analogues à celles de matière grasse butyrique normale issue de la crème, mais dépourvu de cholestérol et avec une meilleure stabilité à l'oxydation et une densité calorique inférieure d'environ 25 %.

Exemple 4

Le procédé de l'exemple 2 a été mis en oeuvre jusqu'à l'étape de désodorisation. La désodorisation a ensuite été effectuée avec de la vapeur à 240°C sous un vide de 2,66 mbars (2 mm de Hg) avec un courant de vapeur de 0,4 % de vapeur par heure pendant 2 h. Les MCT n'ayant pas réagi ont été entraînés à la vapeur pendant la désodorisation et atteignaient une quantité de 10 % du filtrat soumis à la désodorisation. Ces MCT ont été recyclés en tête du procédé.

La matière grasse ainsi obtenue avait un profil de fusion et des propriétés fonctionnelles analogues à ceux d'un beurre de cacao normal comme déterminé par CAD, par mesure de la teneur en matière grasse solide et par incorporation à du chocolat. Elle avait une densité calorique plus faible d'environ 25 %. Il n'y a pas eu de problème de démoulage dans la production de tablettes de chocolat.

Exemple 5

Le procédé de l'exemple 3 a été mis en oeuvre jusqu'à l'étape de désodorisation et la matière grasse a ensuite été fractionnée comme décrit dans l'exemple 2. La désodorisation de la matière grasse fractionnée a ensuite été effectuée comme dans l'exemple 4.

La matière grasse ainsi obtenue avait un profil de fusion et des propriétés fonctionnelles analogues à ceux d'un beurre de cacao normal comme déterminé par CAD, par mesure de la teneur en matière grasse solide et par incorporation au chocolat. Elle avait une densité calorique plus faible d'environ 25 %. Il n'y a pas eu de problème de démoulage dans la production de tablettes de chocolat.

Exemple 6

On a préparé une crème glacée en mélangeant les ingrédients dans les proportions indiquées sur le tableau 2 suivant, en les pasteurisant, en les homogénéisant, en les fouettant et en les congelant par la méthode classique de production d'une crème glacée.

Tableau 2

| Ingrédient | Crème glacée avec substitut (%) | Crème glacée normale (%) |
|---|---|---|
| Crème (à 40 % de matière grasse) | -- | 27 |
| Substitut de matière grasse butyrique | 27 | -- |
| Lait écrémé en poudre | 11 | 11 |
| Saccharose et polydextrose | 15 | 15 |
| Agent stabilisant | 0,4 | 0,4 |
| Eau | 46,6 | 46,6 |

Le produit contenant le substitut de matière grasse butyrique préparé conformément au procédé de l'exemple 1 était très semblable par son arôme, sa consistance crémeuse et ses propriétés de fusion à une crème glacée normale d'après les tests de dégustation effectués par un jury.

La préparation de la crème glacée n'a posé aucune difficulté. Des essais de choc thermique effectués rapidement ont montré un bien meilleur comportement du produit contenant le substitut de matière grasse butyrique.

Exemple 7

On a préparé une sauce-moutarde à la crème en mélangeant de la moutarde avec du sel, du poivre et du jus de citron. Le mélange a ensuite été graduellement battu dans de la crème ou du substitut de matière grasse butyrique fondu et, pour le substitut, il a été dilué dans de l'eau chaude afin d'ajuster le taux de matière grasse à celui contenu dans la crème normale. Les compositions des sauces sont indiquées sur le tableau 3 suivant.

Tableau 3

| Ingrédient | Sauce moutarde additionnée de substitut (%) | Sauce moutarde normale (%) |
|---|---|---|
| Crème (à 40 % de matière grasse) | -- | 72,3 |
| Substitut de matière grasse butyrique (ajusté à 40 % de matière grasse avec de l'eau) | 72,3 | -- |
| Moutarde de Dijon | 21,1 | 21,1 |
| Sel | 0,3 | 0,3 |
| Poivre | 0,3 | 0,3 |
| Jus de citron | 6 | 6 |

La sauce produite avec le substitut de matière grasse butyrique préparé conformément à l'exemple 1 était très semblable par son arôme, sa texture et sa stabilité d'émulsion au produit normal à base de crème. En revanche, la sauce a été rendue plus épaisse par l'utilisation du substitut de matière grasse butyrique.

Exemple 8

On a préparé de la sauce blanche en mélangeant de la farine et de l'eau, en ajoutant du beurre et de la crème ou du substitut de matière grasse butyrique et en chauffant lentement sous agitation jusqu'à ébullition de la sauce. On a ensuite retiré la sauce de la source de chaleur et on l'a versée en agitant dans du vinaigre. Les compositions des sauces étaient telles qu'indiquées sur le tableau 4 suivant.

Tableau 4

| Ingrédient | Sauce blanche avec substitut (%) | Sauce blanche normale (%) |
|---|---|---|
| Farine | 1,3 | 1,3 |
| Eau | 12 | 12 |
| Matière grasse butyrique | -- | 12 |
| Substitut de matière grasse | 12 | -- |
| Crème (à 40 % de matière grasse) | -- | 72,3 |

Tableau 4   (suite)

| Ingrédient | Sauce blanche avec substitut (%) | Sauce blanche normale (%) |
|---|---|---|
| Substitut de matière grasse butyrique (ajusté à 40 % de matière grasse avec de l'eau) | 72,3 | -- |
| Vinaigre de vin blanc | 2,4 | 2,4 |

La sauce produite avec le substitut de matière grasse butyrique préparé conformément à l'exemple 1 était très semblable, par son arôme et sa stabilité émulsion, au produit normal à base de crème. En revanche, l'épaisseur de la sauce a augmenté du fait de l'utilisation du substitut de matière grasse butyrique.

Exemple 9

Une crème acide de la composition indiquée sur le tableau 5 suivant a été produite par mélange de tous les ingrédients ensemble, excepté le substitut de matière grasse butyrique, en utilisant un mixer. Le mélange a ensuite été chauffé à 55°C et le substitut de matière grasse butyrique produit comme indiqué dans l'exemple 1 a été ajouté à l'état fondu, le mixer étant en marche. Le mélange a ensuite été homogénéisé sous pression de 172 bars et le produit d'homogénéisation a été pasteurisé à 78°C pendant 20 minutes. Le mélange a été finalement refroidi à 24°C, inoculé avec une quantité appropriée de cultures de ferments lactiques et incubé à 24°C jusqu'à pH 4,6.

Tableau 5

| Ingrédient | Composition (%) |
|---|---|
| Lait écrémé | 86,2 |
| Matières solides lactiques non grasses | 3,3 |
| Agent stabilisant | 1,9 |
| Substitut de matière grasse butyrique | 8,5 |

Exemple 10

Un assaisonnement au fromage blanc de composition indiquée sur le tableau 6 suivant a été produit par mélange de tous les ingrédients ensemble excepté le substitut de matière grasse butyrique, en utilisant un mixer. Le mélange a ensuite été chauffé à 55°C et du substitut de matière grasse produit comme indiqué dans l'exemple 1 a été ajouté à l'état fondu, le mixer étant en marche. Le mélange a ensuite été homogénéisé sous pression de 172 bars et le produit d'homogénéisation a été pasteurisé à 74°C pendant 30 minutes. Le mélange a ensuite été refroidi rapidement à 4°C.

Tableau 6

| Ingrédient | Composition (%) |
|---|---|
| Lait écrémé | 84 |
| Matières solides lactiques non grasses | 2 |
| Agent stabilisant | 0,5 |
| Sel | 2 |
| Substitut de matière grasse butyrique | 11,6 |

Du fromage blanc caillé à l'état sec a été finalement battu en crème dans un rapport de 60 % de caillé pour 40 % d'assaisonnement et il a été réfrigéré.

Exemple 11

Un yaourt de composition indiquée sur le tableau 7 suivant a été produit en chauffant du lait écrémé à 55°C et en mélangeant tous les ingrédients ensemble excepté le substitut de matière grasse butyrique, au moyen d'un mixer. Du substitut fondu de matière grasse produit comme dans l'exemple 1 a été ajouté au contenu du mixer en marche. Le mélange a ensuite été homogénéisé sous pression de 172 bars et le produit d'homogénéisation a été pasteurisé à 85°C pendant 20 minutes. Le mélange a ensuite été refroidi à 41°C, un inoculum approprié de cultures de ferments lactiques a été ajouté et le mélange a été finalement incubé à 41°C jusqu'à pH 4,6.

Tableau 7

| Ingrédient | Composition (%) |
|---|---|
| Lait écrémé | 95,7 |
| Matières solides lactiques non grasses | 1,75 |
| Agent stabilisant | 0,75 |
| Substitut de matière grasse butyrique | 1,8 |

**Revendications**

1.  Procédé de production d'un substitut de matière grasse butyrique ou de beurre végétal, ne comprenant pas d'étape de distillation moléculaire, caractérisé par le fait que l'on prépare un mélange contenant 30 à 65% en poids d'une huile végétale entièrement hydrogénée riche en acide stéarique et 35 à 70% en poids d'un triglycéride d'acides gras à longueur de chaîne moyenne riche en acides caproique, caprylique et caprique, que l'on agite le mélange avec une lipase immobilisée en l'absence de solvant, que l'on neutralise le mélange interestérifié, que l'on décolore le mélange neutralisé et que l'on désodorise le mélange décoloré.

2.  Procédé suivant la revendication 1, caractérisé en ce qu'il comprend le fractionnement à sec du mélange interestérifié en vue de séparer la tristéarine n'ayant pas réagi.

3.  Procédé suivant la revendication 1, caractérisé en ce qu'il comprend la désodorisation à la vapeur du mélange de matière grasse interestérifié à une température au maximum égale à 200°C.

4.  Procédé suivant la revendication 2, caractérisé en ce qu'il comprend la désodorisation à la vapeur du mélange de matière grasse interestérifié à une température d'au moins 230°C en vue d'éliminer par entraînement le triglycéride d'acides gras à longueur de chaîne moyenne n'ayant pas réagi.

**Patentansprüche**

1.  Verfahren zur Herstellung eines Ersatzstoffs für Butterfett oder für eine pflanzliche Butter, das keine Stufe einer Molekulardestillation umfaßt, dadurch gekennzeichnet, daß man eine Mischung herstellt, die 30 bis 65 Gew.-% eines vollständig hydrierten pflanzlichen Fetts, das reich an Stearinsäure ist, und 35 bis 70 Gew.-% eines Triglycerids von Fettsäuren mit mittlerer Kettenlänge, das reich an Capronsäure, Caprylsäure und Caprinsäure ist, enthält, daß man die Mischung mit einer immobilisierten Lipase in Abwesenheit eines Lösemittels rührt, daß man die umveresterte Mischung neutralisiert, daß man die neutralisierte Mischung entfärbt und daß man die entfärbte Mischung desodoriert.

2.  Verfahren nach Anspruch 1, dadurch gekennzeichnet, daß es die Trockenfraktionierung der umveresterten Mischung umfaßt, um das Tristearin, das nicht reagiert hat, abzutrennen.

3.  Verfahren nach Anspruch 1, dadurch gekennzeichnet, daß es die Desodorisierung der umveresterten Fettstoffmischung mit Dampf bei einer Temperatur bis zu maximal 200°C umfaßt.

4.  Verfahren nach Anspruch 2, dadurch gekennzeichnet, daß es die Desodorisierung der umveresterten Fettstoffmischung mit Dampf bei einer Temperatur von wenigstens 230°C umfaßt, um das Triglycerid von Fettsäuren mit mittlerer Kettenlänge, das nicht reagiert hat, durch Ausschleppen abzutrennen.

**Claims**

1.  Process for producing a butyric fat substitute or vegetable butter substitute, not including a molecular distillation step, characterized in that a mixture is prepared containing 30 to 65 % by weight of an entirely hydrogenated vegetable oil rich in stearic acid and 35 to 70 % by weight of triglyceride of fatty acids having an average chain length rich in caproic, caprylic and capric acids, that the mixture is stirred with an immobilized lipase in the absence of a solvent, that the interesterified mixture is neutralized, that the neutralized mixture is decolorized and that the decolorized mixture is deodorized.

2. Process according to claim 1, characterized in that it includes the dry fractionation of the interesterified mixture with a view to separating unreacted tristearin.

3. Process according to claim 1, characterized in that it includes the steam deodorization of the mixture of interesterified fats at a temperature no higher than 200°C.

4. Process according to claim 2, characterized in that it includes steam deodorization of the mixture of interesterified fats at a temperature of at least 230°C with a view to removing by entrainment the unreacted triglycerides of fatty acids having an average chain length.